# EUROPEAN PATENT SPECIFICATION

(11) **EP 1 498 223 B1**
(45) Date of publication and mention of the grant of the patent: **23.04.2008**
(21) Application number: 04013594.9
(22) Date of filing: 09.06.2004
(51) Int. Cl.: B25B 5/12

(54) **Compact clamping device with side clamping member**
Kompakte Spannvorrichtung mit seitlichem Klemmelement
Dispositif de serrage compact avec membre de serrage latéral

(30) Priority: 16.07.2003 IT MI20031454
(43) Date of publication of application: 19.01.2005
(73) Proprietor: UNIVER S.p.A., 20128 Milano (IT)
(72) Inventor: Migliori, Luciano, 20124 Milan (IT)
(74) Representative: Coloberti, Luigi

(56) References cited:
- EP-A- 0 163 219
- DE-C- 3 936 396
- DE-U- 8 913 386
- DE-U- 29 922 064
- US-A1- 2001 013 164
- US-A1- 2002 093 131
- US-B1- 6 364 300

## Description

### BACKGROUND OF THE INVENTION

This invention relates to a toggle-lever clamping device for clamping work pieces, in particular for clamping and/or centring metal sheets or work pieces in the manufacture of motor vehicles, such as cars, trucks and for other similar uses.

### STATE OF THE ART

Clamping devices are known, which are normally used for clamping and/or centring work pieces, along edges or through appropriate holes in the same work pieces, locking them against a shoulder surface on the device, or against an external holding structure.

Clamping devices of this type are known and described for example in DE-A-39 36 396, US-A-6,364,300, US-A-2002/0093131, and US-A-2001/0013164.

In particular, DE 39 36 396 describes a toggle-lever clamping device for clamping work pieces, comprising a box-shaped body extending in a longitudinal direction, and a clamping member movable between a forward or advanced position in which it disengages a work piece, and a backward or retracted position in which it retains the work piece in which the clamping member is operatively connected to a linear actuator having an axis oriented in the longitudinal direction of the box-shaped body of the clamping device.

The clamping member is connected to the linear actuator by means of an articulated quadrilateral system and an intermediate toggle-lever mechanism comprising a connecting link.

The clamping member in such device extends from the box-shaped body in a direction parallel to the longitudinal axis of the linear actuator, while the articulated quadrilateral system and the intermediate connecting link are constructed and arranged in such a way as to cause the clamping member to perform a movement in a direction substantially parallel to the longitudinal axis of the linear actuator.

A device of this type consequently has considerable overall dimensions in the longitudinal direction, in that the coupling member, and the linear actuator both extend in the same direction.

The excessive length of the clamping device constitutes a drawback in that it is limiting the possibility to use the same in some working conditions, due to the fact that, for example, in the construction of motor vehicles an assembling line usually has limited spaces for the insertion and operation of clamping devices, resulting in restriction in the freedom of movement of the work pieces and the devices themselves, or, at the most, in the impossibility of their use.

### OBJECT OF THE INVENTION

An object of this invention is to provide a toggle-lever clamping device for clamping work pieces, of the aforementioned type, which is structurally simple, and which has limited overall dimensions in the direction in which the clamping member extends and moves, thereby enabling the same clamping device to be used in different situations where the space available for positioning and operating the device is very restricted.

### BRIEF DESCRIPTION OF THE INVENTION

All the foregoing can be achieved by means of a toggle-lever clamping device for clamping work pieces, according to claim 1.

### BRIEF DESCRIPTION OF THE DRAWINGS

These and further features according to this invention, will be more clearly evident from the following description with reference to the accompanying drawings, in which:
- Fig. 1 shows a longitudinal cross-sectional view of a clamping device, with the clamping member in the retracted position in which it retains a work piece;
- Fig. 2 shows a longitudinal cross-sectional view of the clamping device of Fig. 1, with the clamping member in the advanced position in which it disengages the work piece.

### DETAILED DESCRIPTION OF THE INVENTION

The general features of this invention will be illustrated hereunder by means of a preferential embodiment.

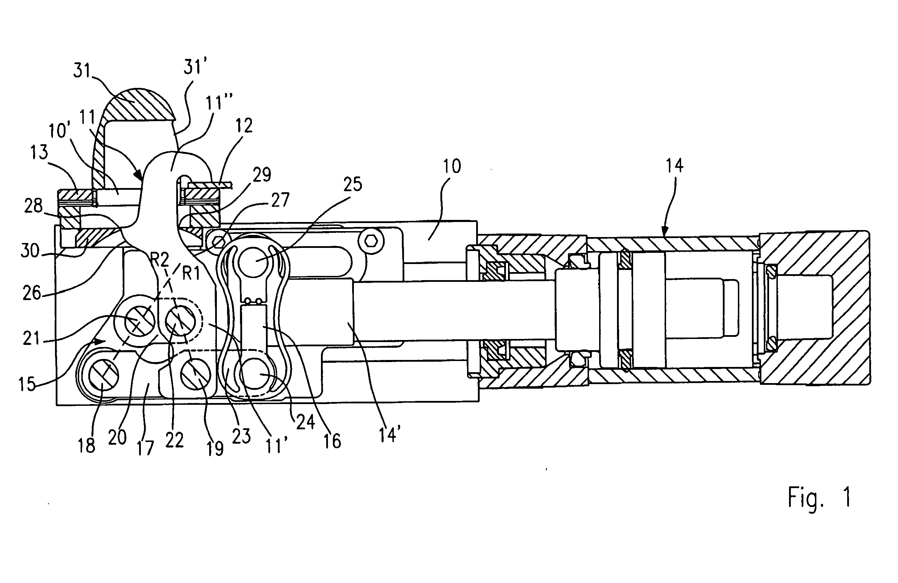

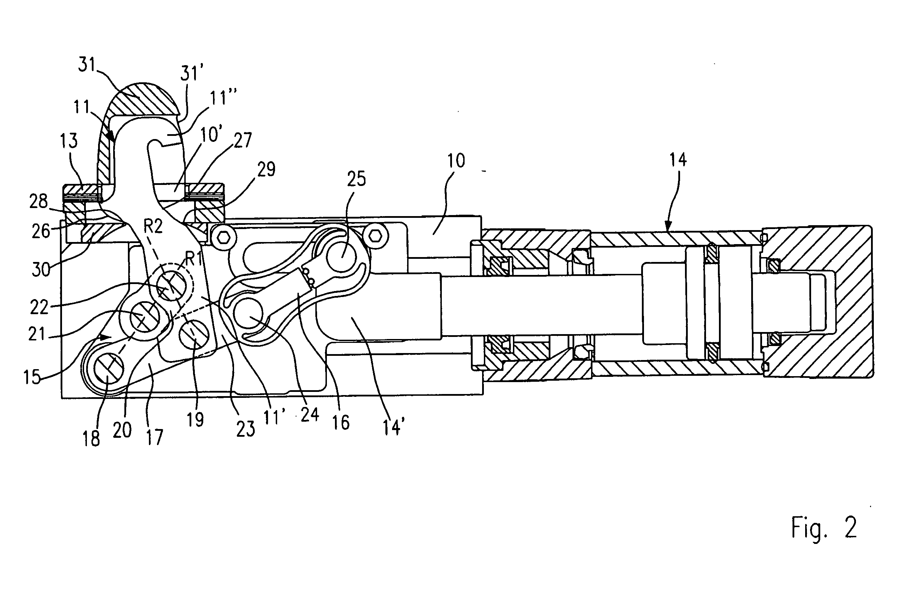

A toggle-lever clamping device for clamping work pieces according to the invention, as shown in figures 1 and 2, comprises a box-shaped body 10 extending in a longitudinal direction, which supports at least one clamping member 11 which protrudes from a side aperture 10' of the box-shaped body 10, as shown.

The clamping member 11 is movable between a forward position in which it disengages a work piece 12 and a backward position in which it retains the work piece, and is provided with a shank 11' ending with a hook-shaped portion 11" protruding from an aperture in a side wall of the body 10, to retain a work piece 12 against a shoulder surface of the same device, comprising for example a support plate 13 secured to the box-shaped body 10, the support plate 13 being provided with a longitudinal aperture aligned with a longitudinal aperture in the side wall of the body 10, from which the hook-shaped portion 11" of the clamping member 11 protrudes.

Fastened to one end of the box-shaped body 10 is a linear actuator 14, for example a pneumatic cylinder or an electric actuator having a longitudinal axis oriented in the longitudinal direction of the box-shaped body 10, and orthogonally arranged in respect to the clamping member 11 of the device; therefore the clamping member 11 extends from a side wall of the box-shaped body 10, in a direction substantially orthogonal to the longitudinal axis of the linear actuator 14.

The clamping member 11 is operatively connected to the linear actuator 14 by means of an articulated quadrilateral system 15 and an intermediate toggle-lever mechanism comprising a connecting link 16. Preferably the connecting link 16 is in the form of an elastically yieldable link member conformed to be elastically yieldable in its longitudinal direction link, and comprises spaced apart stop means arranged to limit the axial compression of the same connecting link 16, as described in EP 1.250.984 of the same inventor.

According to present invention, the articulated quadrilateral system 15 and the connecting link 16 are constructed and arranged in such a way as to transform a linear movement of the actuator 14 into a rocking movement of the clamping member 11 combined with a linear movement of the same clamping member 11 in a direction orthogonal to the longitudinal axis of the linear actuator 14.

In particular, the articulated quadrilateral system 15 comprises a first rod 17 pivotally supported by the box-shaped body 10 to rotate according to a first pivotal axis 18; the rod 17 is connected to the end of the shank 11' of the clamping member 11 by means of a first hinge axis 19.

The articulated quadrilateral system 15 also comprises a second rod 20 of shorter length than the preceding rod 17, which is pivotally supported by the box-shaped body 10 to rotate according to a second pivotal axis 21; the second rod 20 is in turn connected to the shank 11' of the clamping member 11 by means of a second hinge axis 22, spaced apart from the hinge axis 19, in an intermediate position of the shank 11' of the clamping member 11.

The pivotal axes 18,21 of the first and second rods 17,20 are disposed on a side of the clamping member 11 which is opposite the linear actuator 14, in respect to the connecting link 16.

The first rod 17 comprises a lever arm 23 which extends beyond the hinge axis 19 of the same rod 17, for connection to the clamping member 11 in the direction of the linear actuator 14; said lever arm 23 of the first rod 17 is connected by means of a first hinge axis 24 to the intermediate connecting link 16 which in turn, by means of a second hinge axis 25, is connected to a thrust member 14' of the fore end of the rod of the linear actuator 14, for example the piston rod of a pneumatic cylinder.

The aforesaid first and second hinge axis 24 and 25 of the intermediate toggle-lever connecting link 16 are preferably arranged on opposite sides with respect to the longitudinal axis of the linear actuator 14, in both advanced and retracted conditions of the clamping member 31.

The first connecting rod 17 of the articulated quadrilateral system 15, through its extension arm 23, and the intermediate connecting link 16 constitute a toggle-lever mechanism having a per se known dead centre point, which corresponds to an irreversible movement condition for the clamping member 11 in its backward or retracted position in which it retains a work piece.

The pivotal axes 18,21 and the hinge axes 19,22 of the articulated quadrilateral system 15 lie on respective straight lines R1 and R2 which converge towards the clamping member 11; the angle formed by the straight line R1 passing through the pivotal axes 18,21, with the straight line R2 passing through the hinge axes 19,22 of the articulated quadrilateral system 15, preferably ranges between 40° and 60°, in the backward position in which it retains the coupling member 11.

The ratio between the length of the first rod 17 and the length of the second rod 20 of the articulated quadrilateral system 15 preferably ranges between 2 and 2.5.

The clamping member 11 has a first and a second lateral edges 26,27 shaped in such a way as to remain in contact with respective scraping edges 28,29 of a cleaning member in the form of a plate 30 secured to the box-shaped body 10.

The clamping device can comprise a centring member 31 for centring the work pieces, for example in the form of a dowel pin which fits into an appropriate hole in the work pieces. The centring member 31 is provided with a side open cavity for housing the clamping member 11 in its forward position, as shown in figure 2, thereby enabling the centring member 31 to be secured to the box-shaped body 10 above the clamping member 11 itself; the centring member 31 is therefore provided with a side slot 31' from which the clamping member 11 protrudes when moved into the backward position in which it retains a work piece, as shown in figure 1.

A clamping device according to the invention is therefore of limited dimensions in the cross-wise or moving direction of the clamping member 11, thereby enabling the device to be used also in situations where the space available for positioning and operating the device is very restricted.

What has been described and shown with reference to the accompanying drawings has been given purely by way of example in order to illustrate the general features of the invention, and of one of its preferential embodiments; consequently other modifications and variations to the coupling device for coupling work pieces are possible, without thereby deviating from scope of the claims.

## Claims

1. Toggle-lever clamping device for clamping work pieces, of the type comprising:
- a box-shaped body (10) which extends in a longitudinal direction;
- a linear actuator (14) having a longitudinal axis parallely arranged to the longitudinal direction of the box-shaped body (10) of the device; and
- at least one clamping member (11) protruding from an opening (10') of the box-shaped body (10), said clamping member (11) being movable between an advanced position in which it disengages a work piece, and a retracted position in which it retains the work piece;
said clamping member (11) being operatively connected to the linear actuator (14) by means of an articulated quadrilateral system (15) and an intermediate toggle-lever mechanism comprising a connecting link (16),
**characterised in that** the clamping member (11) extends from a side of the box-shaped body (10) in a cross-wise direction in respect to the box-shaped body (10) and the longitudinal axis of the linear actuator (14),
**in that** the articulated quadrilateral system (15) and the intermediate toggle-lever connecting link (16) are constructed and arranged as to transform the linear movement of the actuator (14) into a composite rocking and linear movement of the clamping member (11) with respect to the cross-wise direction of the box-shaped body (10) and the longitudinal, axis of the actuator (14), **in that** the articulated quadrilateral system (15) comprises:
- a first rod (17), said first rod (17) being pivotally supported at a first pivotal axis (18) by the box-shaped body (10), and hingedly connected to the clamping member (11) at a first hinge axis (19);
- a second rod (20) having a length shorter than the first rod (17), the second rod (20) being pivotally supported at a second pivotal axis (21) by the box-shaped body (10), and hingedly connected to the clamping member (11) at a second hinge axis (22), and **in that** the first rod (17) of the articulated quadrilateral system (15) comprises a lever arm (23) operatively connected to the linear actuator (14) by the intermediate toggle-lever connecting link (16),
said pivotal axes (18,21) being disposed, with respect to the connecting link (16), on a side of the clamping member (11) which is opposite to the linear actuator (14) .

2. A clamping device according to claim 1, in which the intermediate toggle-lever connecting link (16) comprises first and second hinge axes (24, 25) connected to the lever arm (23) of the first rod (17), respectively to a pushing member (14') of the linear actuator. (14), **characterised in that** said first and second hinge axes (24,25) of the intermediate toggle-lever connecting link (16) are disposed on opposing sides with respect to the longitudinal axis of the linear actuator (14).

3. A clamping device according to claim 1, **characterised in that** the pivotal axes (18, 21) and the hinge axes (19, 22) of said first and second rods (17, 20) lie on respective straight lines (R1, R2) converging towards the clamping member (11).

4. A clamping device according to claim *3,* **characterised in that** the straight line (R1) passing through the pivotal axes (18,21), and the straight line (R2) passing through the hinge axes (19,22) of the rods (17, 20) form an angle ranging between 40° and 60°, in the backward position of the clamping member (11).

5. A clamping device according to claim 1, **characterised in that** the ratio between the length of the first rod (17) and the length of the second rod (20) of the articulated quadrilateral system (15) ranges from 2 to 2.5.

6. A clamping device according to claim 1, **characterised by** comprising an hollow centring member (31) for a work piece secured to the box-shaped body (10) for housing the clamping member (11) in the advanced position, said centring member (31) being provided with a seating having an open side slot (31') from which the clamping member (11) protrudes in its backward position to retain the work piece.

7. A clamping device according to claim 1, **characterised in that** the clamping member (11) has a first and a second shaped side edges (26,27) conformed to contact respective opposite scraping edges (28,29) of a cleaning member (30) during movement of clamping member (11) between said advanced and retracted positions.

## Patentansprüche

1. Kniehebel-Spannvorrichtung zum Einspannen von Werkstücken des Typs umfassend:
- einen kastenförmigen Körper (10), der eine Längserstreckung aufweist;
- einen linearen Aktor (14) mit einer Längsachse, die parallel zur Längserstreckung des kastenförmigen Körpers (10) der Vorrichtung angeordnet ist; und
- mindestens ein Klemmelement (11), das aus einer Öffnung (10') des kastenförmigen Körpers (10) herausragt, wobei das Klemmelement (11) zwischen einer ausgefahrenen Stellung, in der es ein Werkstück freigibt, und einer eingefahrenen Stellung, in der es das Werkstück festhält, bewegbar ist; und das Klemmelement (11) über ein vierseitiges Gelenksystem (15) und einen dazwischen liegenden, ein Verbindungsglied (16) umfassenden KniehebelMechanismus in Wirkverbindung mit dem linearen Aktor (14) steht,
**dadurch gekennzeichnet, dass**
das Klemmelement (11) sich von einer Seite des kastenförmigen Körpers (10) in Querrichtung in Bezug auf den kastenförmigen Körper (10) und die Längsachse des linearen Aktors (14) erstreckt,
wobei das vierseitige Gelenksystem (15) und das dazwischen liegende Kniehebel-Verbindungsglied (16) dazu ausgebildet und angeordnet sind, die lineare Bewegung des Aktors (14) in eine kombinierte Schwenk- und Linearbewegung des Klemmelementes (11) in Querrichtung zum kastenförmigen Körper (10) und zur Längsachse des Aktors (14) umzuwandeln,
wobei das vierseitige Gelenksystem (15) umfasst:
- einen ersten Stab (17), wobei der Stab (17) auf einer ersten Drehachse (18) am kastenförmigen Körper (10) drehbar gelagert und auf einer ersten Schwenkachse (19) mit dem Klemmelement (11) schwenkbar verbunden ist,
- einen zweiten Stab (20) mit einer Länge, die kürzer ist als die des ersten Stabes (17), wobei der zweite Stab (20) auf einer zweiten Drehachse (21) am kastenförmigen Körper (10) drehbar gelagert und auf einer zweiten Schwenkachse (22) mit dem Klemmelement (11) schwenkbar verbunden ist, und
wobei der erste Stab (17) des vierseitigen Gelenksystems (15) einen Hebelarm (23) umfasst, der über das dazwischen liegende Kniehebel-Verbindungsglied (16) in Wirkverbindung mit dem linearen Aktor (14) steht, und
wobei die Drehachsen (18, 21) in Bezug auf das Verbindungsglied (16) auf einer Seite des Klemmelementes (11) angeordnet sind, die dem linearen Aktor (14) gegenüber liegt.

2. Spannvorrichtung nach Anspruch 1, wobei das dazwischen liegende Kniehebel-Verbindungsglied (16) eine erste und eine zweite Schwenkachse (24, 25) umfasst, die mit dem Hebelarm (23) des ersten Stabes (17) beziehungsweise mit einem Druckglied (14') des linearen Aktors (14) verbunden sind,
**dadurch gekennzeichnet, dass**
die genannte erste und zweite Schwenkachse (24, 25) des dazwischen liegenden Kniehebel-Verbindungsgliedes (16) an gegenüber liegenden Seiten in Bezug auf die Längsachse des linearen Aktors (14) angeordnet sind.

3. Spannvorrichtung nach Anspruch 1, **dadurch gekennzeichnet, dass**
die Drehachsen (18, 21) und die Schwenkachsen (19, 22) des ersten und des zweiten Stabes (17, 20) jeweils auf einer geraden Linie (R1, R2) liegen, die zum Klemmelement (11) hin zusammen laufen.

4. Spannvorrichtung nach Anspruch 3, **dadurch gekennzeichnet, dass**
in der zurückgezogenen Position des Klemmelementes (11) die gerade Linie (R1), die durch die Drehachsen (18, 21) läuft, und die gerade Linie (R2), die durch die Schwenkachsen (19, 22) der Stäbe (17, 20) läuft, einen Winkel bilden, der zwischen 40° und 60° liegt.

5. Spannvorrichtung nach Anspruch 1, **dadurch gekennzeichnet, dass** das Verhältnis zwischen der Länge des ersten Stabes (17) und der Länge des zweiten Stabes (20) des vierseitigen Gelenksystems (15) von 2 bis 2,5 reicht.

6. Spannvorrichtung nach Anspruch 1, **dadurch gekennzeichnet, dass** sie einen einen Hohlraum aufweisenden Zentrierkörper (31) für ein an dem kastenförmigen Körper (10) gesichertes Werkstück zur Unterbringung des Klemmelementes (11) in der ausgefahrenen Stellung umfasst, wobei der genannte Zentrierkörper (31) mit einer Aufnahme mit einer seitlichen Öffnung (31') versehen ist, aus der das Klemmelement (11) sich in seine zurückliegende Position zurückzieht, um das Werkstück zu halten.

7. Spannvorrichtung nach Anspruch 1, **dadurch gekennzeichnet, dass** das Klemmelement (11) eine erste und eine zweite geformte Seitenkante (26, 27) aufweist, die dazu ausgebildet sind, während der Bewegung des Klemmelementes (11) zwischen der genannten ausgefahrenen und eingefahrenen Stellung jeweils gegenüber liegende Schabkanten (28, 29) eines Reinigungselementes (30) zu berühren.

## Revendications

1. Dispositif de serrage du type à levier de basculement pour serrer des pièces de travail, du type comprenant :
- un corps en forme de boîte (10) qui s'étend dans une direction longitudinale ;
- un actionneur linéaire (14) comportant un axe longitudinal disposé de façon parallèle à la direction longitudinale du corps en forme de boîte (10) du dispositif ; et
- au moins un élément de serrage (11) faisant saillie à partir d'une ouverture (10') du corps en forme de boîte (10), ledit élément de serrage (11) pouvant se déplacer entre une position avancée dans laquelle il quitte sa prise avec une pièce de travail, et une position rétractée dans laquelle il maintient la pièce de travail ;
ledit élément de serrage (11) étant relié de façon opérationnelle à l'actionneur linéaire (14) à l'aide d'un système quadrilatéral articulé (15) et d'un mécanisme à levier de basculement intermédiaire comprenant une liaison de raccordement (16),
**caractérisé en ce que** l'élément de serrage (11) s'étend à partir d'un côté du corps en forme de boîte (10) dans une direction croisée par rapport au corps en forme de boîte (10) et à l'axe longitudinal de l'actionneur linéaire (14),
**en ce que** le système quadrilatéral articulé (15) et la liaison de raccordement à levier de basculement intermédiaire (16) sont construits et agencés de façon à transformer le mouvement linéaire de l'actionneur (14) en un mouvement de balancement et linéaire composite de l'élément de serrage (11) par rapport à la direction croisée du corps en forme de boîte (10) et de l'axe longitudinal de l'actionneur (14),
**en ce que** le système quadrilatéral articulé (15) comprend :
- une première tige (17), ladite première tige (17) étant supportée de façon à pouvoir pivoter en un premier axe de pivotement (18) par le corps en forme de boîte (10), et reliée de façon articulée à l'élément de serrage (11) en un premier axe d'articulation (19) ;
- une deuxième tige (20) ayant une longueur plus courte que la première tige (17), la deuxième tige (20) étant supportée de façon à pouvoir pivoter en un deuxième axe de pivotement (21) par le corps en forme de boîte (10), et reliée de façon articulée à l'élément de serrage (11) en un deuxième axe d'articulation (22), et
**en ce que** la première tige (17) du système quadrilatéral articulé (15) comprend un bras de levier (23) relié de façon opérationnelle à l'actionneur linéaire (14) par la liaison de raccordement à levier de basculement intermédiaire (16),
lesdits axes de pivotement (18, 21) étant disposés, par rapport à la liaison de raccordement (16), sur un côté de l'élément de serrage (11) qui est opposé à l'actionneur linéaire (14).

2. Dispositif de serrage selon la revendication 1, dans lequel la liaison de raccordement à levier de basculement intermédiaire (16) comprend des premier et deuxième axes d'articulation (24, 25) reliés au bras de levier (23) de la première tige (17), et, respectivement, à un élément de poussée (14') de l'actionneur linéaire (14), **caractérisé en ce que** lesdits premier et deuxième axes d'articulation (24, 25) de la liaison de raccordement à levier de basculement intermédiaire (16) sont disposés sur des côtés opposés par rapport à l'axe longitudinal de l'actionneur linéaire (14).

3. Dispositif de serrage selon la revendication 1, **caractérisé en ce que** les axes de pivotement (18, 21) et les axes d'articulation (19, 22) desdites première et deuxième tiges (17, 20) se trouvent sur des lignes droites respectives (R1, R2) convergeant vers l'élément de serrage (11).

4. Dispositif de serrage selon la revendication 3, **caractérisé en ce que** la ligne droite (R1) passant par les axes de pivotement (18, 21) et la ligne droite (R2) passant par les axes d'articulation (19, 22) des tiges (17, 20) forment un angle compris entre 40° et 60°, dans la position arrière de l'élément de serrage (11).

5. Dispositif de serrage selon la revendication 1, **caractérisé en ce que** le rapport entre la longueur de la première tige (17) et la longueur de la deuxième tige (20) du système quadrilatéral articulé (15) est compris entre 2 et 2,5.

6. Dispositif de serrage selon la revendication 1, **caractérisé en ce qu'**il comprend un élément de centrage creux (31) pour une pièce de travail fixée au corps en forme de boîte (10) pour renfermer l'élément de serrage (11) dans la position avancée, ledit élément de centrage (31) étant muni d'un logement comportant une fente latérale ouverte (31') à partir de laquelle l'élément de serrage (11) fait saillie dans sa position arrière pour maintenir la pièce de travail.

7. Dispositif de serrage selon la revendication 1, **caractérisé en ce que** l'élément de serrage (11) comporte des premier et deuxième bords latéraux ayant une certaine forme (26, 27) conformés pour venir en contact avec des bords de frottement opposés respectifs (28, 29) d'un élément de nettoyage (30) durant le déplacement de l'élément de serrage (11) entre lesdites positions avancée et rétractée.
